# EUROPEAN PATENT APPLICATION

(11) **EP 4 242 454 A1**
(43) Date of publication of application: **13.09.2023**
(21) Application number: 22161110.6
(22) Date of filing: 09.03.2022
(51) Int. Cl.: F03D 17/00, F03D 7/02

(54) **ESTIMATION OF AVAILABLE INERTIAL RESPONSE POWER FOR A WIND TURBINE**

(71) Applicant: Siemens Gamesa Renewable Energy A/S, 7330 Brande (DK)
(72) Inventor: Esbensen, Thomas, 7400 Herning (DK); Ionita, Claudiu, 9530 Støvring (DK)
(74) Representative: SGRE-Association

(57) **Abstract**

A method of estimating available inertial response power for a wind turbine is described. The method comprises: obtaining (241) wind speed preview information (111) indicative of a wind speed at an upwind location a predetermined distance away from the wind turbine, receiving (242) operational data (112) indicative of an operational state of the wind turbine, and estimating (243) the wind turbine's available inertial response power based on the wind speed preview information and the operational data. A corresponding system as well as a wind turbine and a wind park utilizing such system are also described.

## Description

### Field of Invention

The present invention relates to the field of wind turbines, in particular to methods and systems for estimating available inertial response power for a wind turbine. The present invention further relates to a wind turbine and to a wind park comprising a plurality of wind turbines.

### Art Background

A functionality called inertial response (IR) exists that can shortly (e.g., for a period of 10 seconds) increase the power delivered by a wind turbine by extracting kinetic energy from the rotor of the wind turbine, for example in order to support the grid during an under-frequency event. After performing an inertial response, the wind turbine will need a period to recover from the drop in rotor speed and output power caused by the inertial response. This recovery is usually subject to various constraints from the grid operator that have to be taken into account. Hence, the actual amount of additional power that can be delivered during an inertial response depends on the available wind and the operational state of the wind turbine, and it is limited by the aforementioned constraints.

The wind turbine controller typically estimates the available inertial response power based on the current state, including in particular wind speed and direction, and the assumption that this state will remain throughout an inertial response event.

However, this way of estimating the available inertial response power is problematic in cases where the wind actually changes during the inertial response event. If the wind speed increases, the inertial response does not benefit from this and is thus suboptimal. On the other hand, if the wind speed decreases, the recovery constraints may be violated.

Thus, there may be a need for an improved way of estimating the available inertial response power for a wind turbine.

### Summary of the Invention

This need may be met by the subject matter according to the independent claims. Advantageous embodiments of the present invention are described by the dependent claims.

According to a first aspect of the invention, there is provided a method of estimating available inertial response power for a wind turbine, the method comprising (a) obtaining wind speed preview information indicative of a wind speed at an upwind location a predetermined distance away from the wind turbine, (b) receiving operational data indicative of an operational state of the wind turbine, and (c) estimating the wind turbine's available inertial response power based on the wind speed preview information and the operational data.

This aspect of the invention is based on the idea that wind speed preview information is obtained and used in the estimation of the wind turbine's available inertial response power. The wind speed preview information is indicative of a wind speed at an upwind location a predetermined distance away from the wind turbine. In other words, the wind speed preview information allows a precise prediction of the wind speed at the wind turbine rotor at a later point in time corresponding to the predetermined distance.

According to an embodiment of the invention, the step of obtaining wind speed preview information utilizes a LIDAR (light detection and ranging) device configured to measure the wind speed at the upwind location.

By monitoring the wind speed at the upwind location, i.e., at a certain distance in front of the wind turbine, corresponding changes in the wind speed that will occur at a later point in time at the wind turbine location can be observed and taken into consideration in the estimation of the wind turbine's available inertial response power.

According to a further embodiment of the invention, the LIDAR device is arranged at a nacelle of the wind turbine.

By arranging the LIDAR device at the nacelle, it can be assured that the LIDAR device always has a good view in the upwind direction of the wind turbine, i.e., towards the wind direction. In some embodiments, the LIDAR device may be configured to determine the wind speed along an arc, such as a 30°, 60° or 120° circle segment in front of the wind turbine instead of a single point in the upwind direction. Thereby, deviations in wind direction can also be taken into account.

According to a further embodiment of the invention, the predetermined distance between the wind turbine and the upwind location is between 50m and 250m, in particular between 100m and 200m, in particular around 150m.

More specifically, the predetermined distance should be selected in view of typical wind speed and typical duration of an inertial response such that the distance is long enough to provide a useful preview of the wind speed.

According to a further embodiment of the invention, the operational data comprises one or more of (i) a wind turbine pitch angle value, (ii) a wind turbine active power value, (iii) a wind turbine reactive power value, and (iv) a wind turbine rotor speed value.

According to a further embodiment of the invention, estimating the wind turbine's available inertial response power comprises solving an optimization problem.

In other words, the estimated available inertial response power is found as an optimum value given the available information.

According to a further embodiment of the invention, the optimization problem accounts for predetermined inertial response constraints.

By considering the predetermined inertial response constraints, such as those constraints imposed by a grid operator or by the manufacturer of the wind turbine, it is assured that an inertial response will not jeopardize the continued operation of the wind turbine after the inertial response.

According to a further embodiment of the invention, the inertial response constraints comprise one or more of a predetermined inertial response release time and a predetermined maximum power dip.

The predetermined inertial response release time denotes the required duration of am inertial response.

The predetermined maximum power dip denotes the maximum allowable dip in output power after the inertial response when the wind turbine is recovering (i.e., getting the rotor speed back up to the nominal value).

According to a second aspect of the invention, there is provided a system for estimating available inertial response power for a wind turbine, the system comprising (a) a preview unit configured to obtain wind speed preview information indicative of a wind speed at an upwind location a predetermined distance away from the wind turbine, (b) a receiving unit configured to receive operational data indicative of an operational state of the wind turbine, and (c) an estimating unit configured to estimate the wind turbine's available inertial response power based on the wind speed preview information and the operational data.

This aspect of the invention is essentially based on the same idea as the first aspect described above. In particular, the second aspect relates to a system capable of performing the method according to the first aspect and thereby obtaining the same advantages and benefits.

According to a further embodiment of the invention, the preview unit comprises a LIDAR (light detection and ranging) device configured to measure the wind speed at the upwind location.

As known in the art, a LIDAR device is capable of measuring wind speed at a certain location (distance). Thus, by monitoring the wind speed at the upwind location, i.e., at a certain distance in front of the wind turbine, corresponding changes in the wind speed that will occur at a later point in time at the wind turbine location can be observed and taken into consideration in the estimation of the wind turbine's available inertial response power.

According to a further embodiment of the invention, the LIDAR device is arranged at a nacelle of the wind turbine.

By arranging the LIDAR device at the nacelle, it can be assured that the LIDAR device always has a good view in the upwind direction of the wind turbine, i.e., towards the wind direction. In some embodiments, the LIDAR device may be configured to determine the wind speed along an arc, such as a 30°, 60° or 120° circle segment in front of the wind turbine instead of a single point in the upwind direction. Thereby, deviations in wind direction can also be taken into account.

According to a further embodiment of the invention, the predetermined distance between the wind turbine and the upwind location is between 50m and 250m, in particular between 100m and 200m, in particular around 150m, and/or the operational data comprises one or more of (i) a wind turbine pitch angle value, (ii) a wind turbine active power value, (iii) a wind turbine reactive power value, and (iv) a wind turbine rotor speed value.

The predetermined distance should be selected in view of typical wind speed and typical duration of an inertial response such that the distance is long enough to provide a useful preview of the wind speed. The values and ranges mentioned above are typical values.

According to a further embodiment of the invention, the estimating unit is configured to solve an optimization problem, wherein the optimization problem in particular accounts for predetermined inertial response constraints, such as a predetermined inertial response release time and/or a predetermined maximum power dip.

In other words, the estimated available inertial response power may in particular be found as an optimum value given the available information.

By considering the predetermined inertial response constraints, such as those constraints imposed by a grid operator or by the manufacturer of the wind turbine, it may be assured that an inertial response will not jeopardize the continued operation of the wind turbine after the inertial response.

The predetermined inertial response release time denotes the required duration of am inertial response.

The predetermined maximum power dip denotes the maximum allowable dip in output power after the inertial response when the wind turbine is recovering (i.e., getting the rotor speed back up to the nominal value).

According to a third aspect of the invention, there is provided a wind turbine comprising the system according to the second aspect or any one of the above embodiments, wherein the system is in particular at least in part comprised by a wind turbine controller.

This aspect of the invention is essentially based on the same idea as the first and second aspects described above. In particular, a wind turbine capable of benefitting from the advantageous system according to the second aspect is provided. At least a part of the system may advantageously be implemented as functional units in a wind turbine controller.

According to a fourth aspect of the invention, there is provided a wind park comprising (a) a plurality of wind turbines according to the third aspect, and (b) a wind park controller in communication with each of the plurality of wind turbines, wherein the wind park controller is configured to control inertial response of the wind turbines based on the corresponding estimated available inertial response powers.

This aspect of the invention is based on essentially the same idea as the aspects described above and in particular provides an entire wind park capable of delivering an inertial response to support the power grid in an effective, precise, and secure manner.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a system according to an exemplary embodiment.
Figure 2 shows a flowchart of a method according to an exemplary embodiment.
Figure 3 shows a plot of wind turbine power in conjunction with an initial response event.
Figure 4 shows a wind park in accordance with an exemplary embodiment.
Figure 5 shows wind speed and a comparison of estimated available inertial response power in accordance with an exemplary embodiment and the prior art.

### Detailed Description

The illustration in the drawing is schematic. It is noted that in different figures, similar or identical elements are provided with the same reference numerals or with reference numerals which differ only within the first digit.

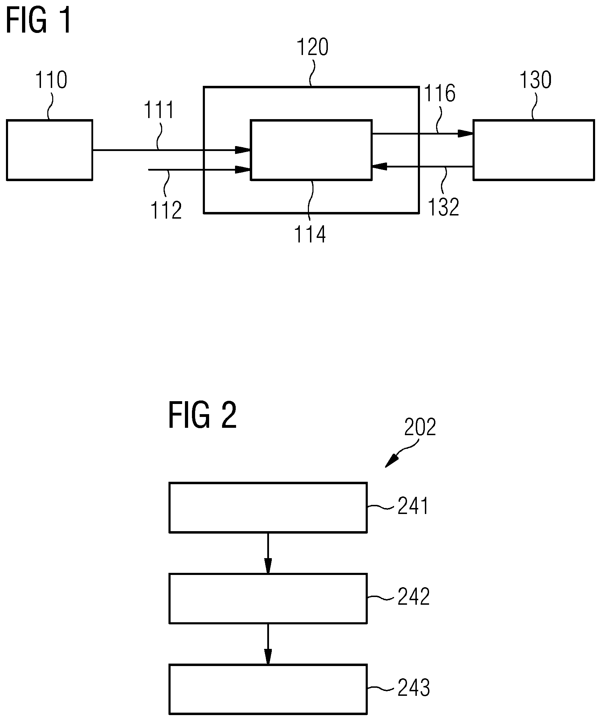

Figure 1 shows a system according to an exemplary embodiment. The system comprises a preview unit 110, a receiving unit 112, and an estimating unit 114. The estimating unit 114 is configured as a functional block or module within a wind turbine controller 120. Furthermore, the wind turbine controller 120 and the estimating unit 114 are in communication with a wind park controller 130.

The preview unit 110 is configured to obtain wind speed preview information indicative of a wind speed at an upwind location a predetermined distance away from the wind turbine, such as between 50m and 250m away from the wind turbine. The preview unit 110 preferably comprises a LIDAR device arranged at a nacelle of the wind turbine (not shown) such that it points always points towards the wind when the wind turbine is yawed into the wind. Due to the distance between the wind turbine and the upwind location, the wind speed information 111 provided by the LIDAR device 110 will be closely correlated with the wind speed that will be present at the wind turbine somewhat later. Hence, the preview unit 110 provides the estimating unit 114 with preview information on the wind speed.

The receiving unit 112 is configured to receive operational data indicative of an operational state of the wind turbine, such as a wind turbine pitch angle value, a wind turbine active power value, a wind turbine reactive power value, a wind turbine rotor speed value, and any other relevant operational parameter values. The operational data 112 may be provided by corresponding sensors (not shown) and/or the wind turbine controller 120 itself.

The estimating unit 114 is configured to estimate the wind turbine's available inertial response power based on the wind speed preview information and the operational data. More specifically, the estimating unit 114 may estimate the wind turbine's available inertial response power by solving an optimization problem. In other words, the estimated available inertial response power may be obtained as the optimum value given the wind speed preview information and the operational data. Furthermore, various constraints may be accounted for when solving the optimization problem. Such constraints may in particular include a predetermined inertial response release time (the duration of the inertial response) and a predetermined maximum power dip (the dip in output power caused by the extraction of additional power during the inertial response) .

The estimated inertial response power of the wind turbine, also referred to as IR_Pₐᵥₐ, is supplied to the wind park controller 130 as communication signal 116. The wind park controller 130 receives corresponding estimates from each wind turbine in the wind park and supplies corresponding control signals 132 to the wind turbine controllers 120 when an inertial response has to be performed.

Figure 2 shows a flowchart 202 of a method according to an exemplary embodiment. The method of estimating available inertial response power for a wind turbine begins at 241 by obtaining wind speed preview information indicative of a wind speed at an upwind location a predetermined distance away from the wind turbine. At 242, operational data 112 indicative of an operational state of the wind turbine is received. Then, at 243, the wind turbine's available inertial response power is estimated based on the wind speed preview information and the operational data. The method steps 241 to 243 correspond to the functionality discussed above in conjunction with Figure 1.

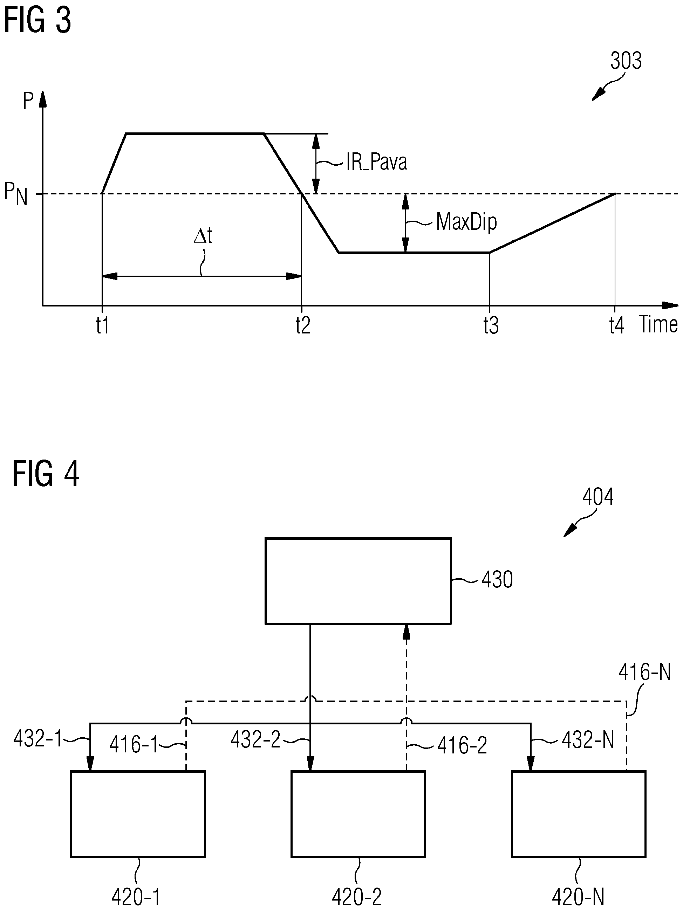

Figure 3 shows a plot of wind turbine power in conjunction with an inertial response event. Prior to the inertial response event that begins at t=t1, the wind turbine is operating at nominal power P_{N}. Due to e.g., an underfrequency event occurring in the power grid, the wind turbine is then controlled to increase its power output by an amount corresponding to the most recent estimate IR_Pₐᵥₐ for short, so-called release period until t=t2. The duration Δt (=t2-t1) is typically measured in seconds, such as 10 seconds. During the release period, the additional power IR_{_}Pₐᵥₐ is output by taking kinetic energy from the rotor, causing the wind turbine to slow down. After the release period, the wind turbine is allowed to output less power than P_{N} (P=P_{N}-MaxDip) during the so-called speed recovery period that extends until t=t3. During this period, the wind turbine rotor will regain its kinetic energy and get back to the appropriate rotational speed. Finally, a power recovery period is provided between t=t3 and t=t4, in which the wind turbine can get back up to the power level P_{N} that it was producing prior to the inertial response event.

Figure 4 shows a wind park 404 in accordance with an exemplary embodiment. The wind park 404 comprises a total of N wind turbines, each having a wind turbine controller 420-1, 420-2, 420-N in communication with wind park controller 430. During operation, each wind turbine controller 420-1, 420-2, 420-N estimates its available inertial response power as discussed above in conjunction with Figure 1 and Figure 2 and outputs the estimate 416-1, 416-2, 416-N to the wind park controller 430. In case of an inertial response event, the wind park controller supplies corresponding control signals 432-1, 432-2, 432-N the respective wind turbine controllers 420-1, 420-2, 420-N.

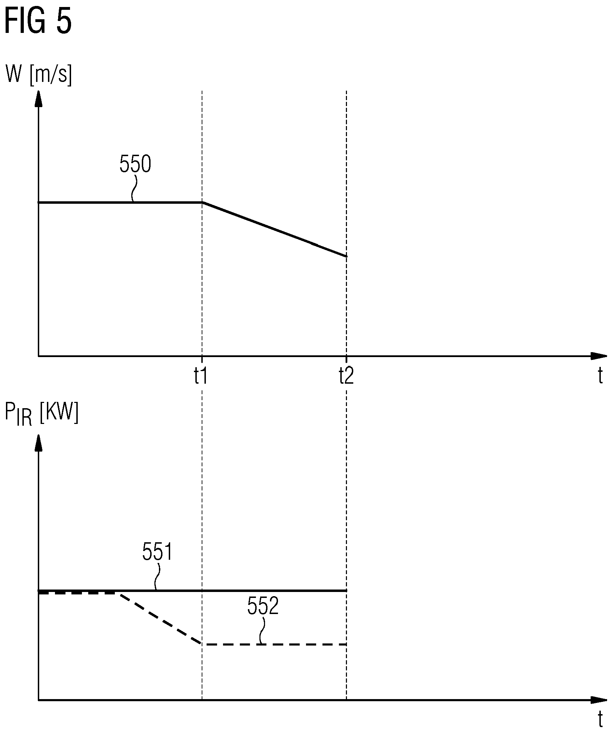

Figure 5 shows wind speed 550 as a function of time and corresponding estimates of available inertial response power in accordance with an exemplary embodiment and the prior art. As shown, the wind speed 550 is constant until t=t1 and then starts to decrease linearly.

Without any wind preview information, the estimated available inertial response power 551 at t=t1 would have to rely on the false assumption that the wind speed does not change during a possible inertial response (lasting until t=t2). Hence, the estimate would be too high and the actual inertial response power output from the wind turbine would have to be adjusted during the event in order to prevent excessive rotor deceleration from which the wind turbine would not be able to recover in due time.

These drawbacks are prevented by the present invention by utilizing wind speed preview information as discussed above and illustrated in Figure 5 where the curve 552 shows the corresponding estimate. As can be seen, the curve 552 starts to decrease in good time before the reduction in wind speed that begins at t=t1. Hence, at t=t1, the estimated inertial response power is significantly lower than indicated by the curve 551.

As explained above, the present invention utilizes wind preview information, e.g., from a LIDAR device, and thereby improves the estimate of the available power estimate. Furthermore, it ensures that the behavior and capabilities during IR events are better predicted. With higher penetration of wind turbines into the electrical grid, it is crucial that wind turbines can support grid events and act as stable sources of power. The present invention provides a significant contribution to the capability of delivering higher quality IR services.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of estimating available inertial response power for a wind turbine, the method comprising
obtaining (241) wind speed preview information (111) indicative of a wind speed at an upwind location a predetermined distance away from the wind turbine,
receiving (242) operational data (112) indicative of an operational state of the wind turbine, and
estimating (243) the wind turbine's available inertial response power based on the wind speed preview information and the operational data.

2. The method according to the preceding claim, wherein the step of obtaining wind speed preview information utilizes a LIDAR device configured to measure the wind speed at the upwind location.

3. The method according to the preceding claim, wherein the LIDAR device is arranged at a nacelle of the wind turbine.

4. The method according to any one of the preceding claims, wherein the predetermined distance between the wind turbine and the upwind location is between 50m and 250m, in particular between 100m and 200m, in particular around 150m.

5. The method according to any one of the preceding claims, wherein the operational data comprises one or more of:
a wind turbine pitch angle value,
a wind turbine active power value,
a wind turbine reactive power value, and
a wind turbine rotor speed value.

6. The method according to any one of the preceding claims, wherein estimating the wind turbine's available inertial response power comprises solving an optimization problem.

7. The method according to the preceding claim, wherein the optimization problem accounts for predetermined inertial response constraints.

8. The method according to the preceding claim, wherein the inertial response constraints comprise one or more of a predetermined inertial response release time and a predetermined maximum power dip.

9. A system for estimating available inertial response power for a wind turbine, the system comprising
a preview unit (110) configured to obtain wind speed preview information indicative of a wind speed at an upwind location a predetermined distance away from the wind turbine,
a receiving unit (112) configured to receive operational data indicative of an operational state of the wind turbine, and
an estimating unit (114) configured to estimate the wind turbine's available inertial response power based on the wind speed preview information and the operational data.

10. The system according to the preceding claim, wherein the preview unit comprises a LIDAR device configured to measure the wind speed at the upwind location.

11. The system according to the preceding claim, wherein the LIDAR device is arranged at a nacelle of the wind turbine.

12. The system according to any one of claims 9 to 11, wherein the predetermined distance between the wind turbine and the upwind location is between 50m and 250m, in particular between 100m and 200m, in particular around 150m, and/or wherein the operational data comprises one or more of:
a wind turbine pitch angle value,
a wind turbine active power value,
a wind turbine reactive power value, and
a wind turbine rotor speed value.

13. The system according to any one of claims 9 to 12, wherein the estimating unit is configured to solve an optimization problem, wherein the optimization problem in particular accounts for predetermined inertial response constraints, such as a predetermined inertial response release time and/or a predetermined maximum power dip.

14. A wind turbine comprising the system according to any one of claims 9 to 13, wherein the system is in particular at least in part comprised by a wind turbine controller (120).

15. A wind park comprising
a plurality of wind turbines (420-1, 420-2, 420-N) according to claim 14, and
a wind park controller (430) in communication with each of the plurality of wind turbines,
wherein the wind park controller is configured to control inertial response of the wind turbines based on the corresponding estimated available inertial response powers.
